**Europäisches Patentamt**

**European Patent Office**

**Office européen des brevets**

(19)

(11) Publication number: **0 006 017**
**A2**

(12)

# EUROPEAN PATENT APPLICATION

(21) Application number: **79301023.2**

(22) Date of filing: **31.05.79**

(51) Int. Cl.²: **C 23 F 11/00**
**C 23 G 3/00, C 23 G 1/00**
**//B08B3/02**

(30) Priority: **31.05.78 GB 2581178**

(43) Date of publication of application:
**12.12.79 Bulletin 79/25**

(84) Designated Contracting States:
**AT BE CH DE FR GB IT NL SE**

(71) Applicant: **Bratland, Emil Andreas**
**Rosenbergsgate 34 P.O. Box 213**
**5001 Bergen(NO)**

(72) Inventor: **Bratland, Emil Andreas**
**Rosenbergsgate 34 P.O. Box 213**
**5001 Bergen(NO)**

(74) Representative: **Cook, Anthony John et al,**
**D. YOUNG & CO. 9 & 10, Staple Inn**
**London, WC1V 7RD(GB)**

(54) Method of anti-corrosion treatment and apparatus for operating same.

(57) A cleaning and anti-corrosion treatment for articles such as engineering parts and particularly for motor vehicles includes the following steps:-
    (a) placing the vehicle in a chamber;
    (b) closing the chamber;
    (c) supplying a cleaning liquid containing a fat emulsifier to the chamber under pressure for a predetermined time;
    (d) washing the vehicle with water;
    (e) supplying a rust-removing and anti-corrosive liquid to the chamber under pressure for a predetermined time, and
    (f) drying the vehicle as necessary and removing it from the chamber.
    The anti-corrosive liquid used may be water-based and have the following composition per 100 ml of water:-

| | |
|---|---|
| Citric acid (anhydrous) | 3 to 52 grammes |
| Fat emulsifier | 0.001 to 4 grammes |
| Corrosion inhibitor | 0.001 to 3 grammes. |

EP 0 006 017 A2

./...

Fig. 2

1.

## METHOD OF ANTI-CORROSION TREATMENT
## AND APPARATUS FOR OPERATING SAME

This invention relates to a method and an apparatus for cleaning and anti-corrosion treatment of engineering parts and articles herein called articles, in particular ferrous articles, and especially transport vehicles. The invention can be applied to the cleaning and treatment of motor cars.

There has been proposed, in British Patent Specifiation No. 1 377 363, a method and apparatus for coating steel panels with a wax like protective material. This involves

(a) placing the panel in a booth,

(b) sealing the booth,

(c) generating a mist of protective material by discharging the material from a plurality of spray guns, and

(d) agitating the mist of material with a fan or the like so as to create substantial turbulence within the booth.

In this method there is no sequential application of a cleanser, of water and then a rust-proofer nor any step of allowing ingress of the liquids to parts which are bored for this purpose. The aim of the Patentee in Specification 1 377 363 is merely to coat a vehicle body with wax-like protective material.  In contrast, the present invention aims to facilitate a thorough anti-corrosion treatment of engineering parts in particular motor vehicles.

The cost of rust in motor vehicles alone is many millions of pounds per year.  Although there have been attempts in the past to provide effective rust-proofing of motor vehicles, such attempts have not been entirely successful and few if any have been effective for a long period.  There is also a need for an effective rust-proofing treatment for engineering parts and articles to be used in the off-shore oil industry.

According to the invention, there is provided a cleaning and anti-corrosion treatment method for a ferrous article which comprises the following steps:

(a)  placing the article in a chamber;

(b)  closing the chamber;

(c)  supplying a cleaning liquid containing a fat emulsifier to the chamber under pressure for a predetermined time;

(d)  washing the article with water;

(e)  supplying a rust-removing and anti-corrosion liquid to the chamber under pressure for a predetermined time, and

(f)  drying the article if necessary and removing it from the chamber.

In a preferred example of the method of the invention, the step (e) may be carried out at a pressure (above atmospheric) in the chamber of from 0.15 to 0.5 atmospheres, and at a temperature of from 20 to 85°C. These pressure and temperature ranges are not critical; any suitable pressure and temperature may be used.

Also according to the invention, there is provided apparatus for the cleaning and anti-corrosion treatment of metal articles including a chamber, means for making the chamber substantially pressure-tight, a platform within the chamber, a sump beneath the platform, spray nozzles within the chamber for directing liquid onto or into the or each article, a filter located in an exit pipe for the sump, and control means for controlling the supply of liquid to the nozzles whereby the article can be treated in succession with a plurality of different liquids.

In an advantageous embodiment of the invention, the article treated is a motor vehicle. The hollow constructional parts of the vehicle are bored so as to allow ingress of liquid to their interior before the supply of cleaning liquid is effected.

The preferred apparatus for carrying out this advantageous feature of the invention includes a plurality of nozzles fixed at the ends of respective hoses, the nozzles being attachable to the holes bored in the hollow parts of the vehicle. Such hoses are supplied with the cleaning liquid and/or with the anti-corrosion liquid under pressure. Preferably this supply is provided by a pump capable of delivering a continuously-variable output pressure. Advantageously the output pressure of the pump is controlled in accordance with the flow rate through one or more selected nozzles.   In this way, internal channels in the vehicle may be gradually cleared of rust and the flow rate of liquid therethrough increased as the cross-sectional area of the channel increases as the rust is cleared away, and at the same time the application of a sudden high pressure which might rupture the walls of said channels is avoided.   This feature also offers the possibility of continuing the treatment by rinsing with clean water, to which, in a specially preferred manner of practising the invention, there has been added a water-based rust preventive liquid.   The effect of this is to inhibit or prevent the formation of fresh rust in the interior of such channels.   A drying step preferably terminates the treatment.   A vehicle so treated is in an excellent condition for an underseal coating of known type to be applied thereto, and its useful life will be greatly lengthened by such a preparatory treatment.   The pump used to supply liquid to the hose nozzles is preferably different from the pump used to supply liquid to the spray nozzles in the chamber.   This is because the two types of nozzles, for best results, are fed at different pressures, the spray nozzles being fed at the higher pressure.

The rust-proofing and anti-corrosion liquid employed is preferably water based and preferably includes the following essential ingredients:  citric acid, a fat emulsifier and a corrosion inhibitor.   Such ingredients may be present, per 100 ml. of water, in the amounts:

| | | |
|---|---|---|
| Citric acid (anhydrous) | 3 | to 52 grammes |
| Fat emulsifier | 0.001 | to  4 grammes |
| Corrosion inhibitor | 0.001 | to  3 grammes. |

The anti-corrosion liquid may alternatively be based upon an organic acid having properties similar in this context to citric acid.    That is to say, one may employ instead of or in addition to citric acid in the above composition, one or more aliphatic hydroxycarboxylic acids especially those containing one, two or three - COOH groups.    In particular one may employ lactic acid, tartaric acid or glycolic acid.

The chamber may include a raised platform for the vehicle and a sump beneath the platform to collect liquid draining from the vehicle, and in a preferred version of the method such liquid may be filtered and fed back to storage ready for re-use.

By providing a gap in the ramp, and a laterally sliding or an upwardly sliding door which can be accommodated in the gap, the chamber may be rendered substantially pressure tight.

The apparatus according to the invention may also be used for carrying out degreasing, rinsing and drying of metal parts.    The cleaning liquid employed may be a hydrocarbon solvent such as white spirit or paraffin, instead of water plus a fat emulsifier.

An illustrative and non-limiting example of the invention will now be described with reference to the accompanying drawings, in which:

Figure 1 is a schematic vertical sectional view through one example of apparatus according to the present invention;

Figure 2 is a diagram of a system for supplying treatment liquids for use in the method of the invention, and

0006017

Figures 3 and 4 are diagrammatic representations
of a valve-pump arrangement which can be
used in one example of the method and
apparatus according to the invention.

Figure 5 is a view similar to Figure 1 but
illustrating spray nozzles and a hose
nozzle.

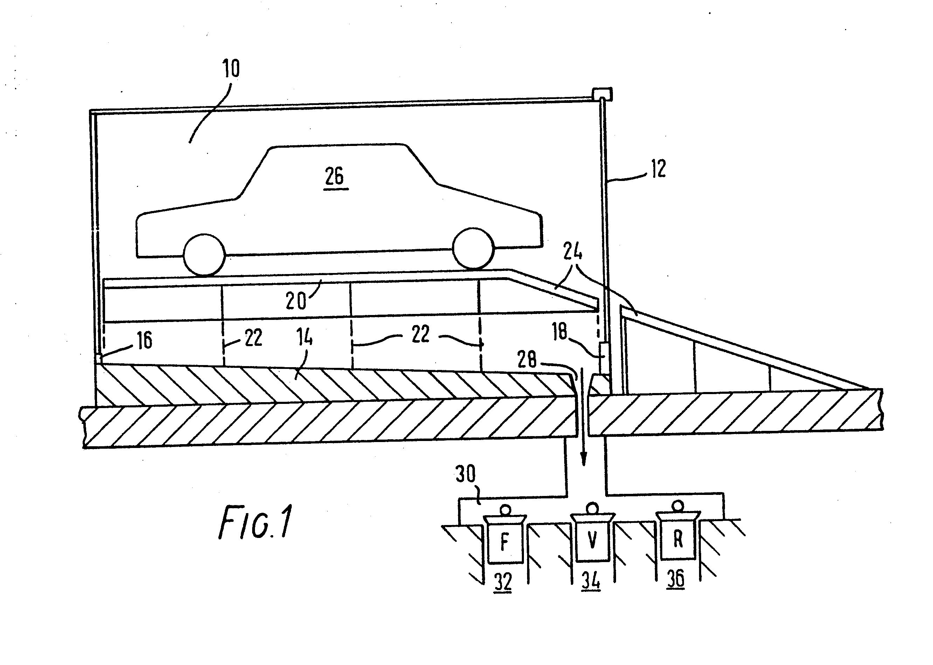

The apparatus illustrated in Figure 1 includes a
chamber 10 defined by walls, a roof, a floor, and a
door 12. At the bottom of the chamber a sump is defined
by a sloping lower surface 14 and end walls 16, 18.
Above the sump is located a platform 20 which is supported on piers 22. A ramp 24 leads up to the platform 20.
The ramp 24 has a gap therein to receive the door 12 which
in the illustrated embodiment is a laterally sliding door
but may be a vertically sliding door. A motor car 26
is shown in position on the platform 20 ready for the
rust proofing method to be carried out. The sump has
an exit channel 28 through which spent liquid can be
discharged. As illustrated, it passes to an intermediate container or manifold 30 having 3 separate outlets
32, 34, 36 each controlled by a respective valve F, V
and R.

Storage tanks for the various liquids used in the
method may be provided, and each of these tanks is
connected by suitable piping to control unit containing
control valves and thence to a series of spray nozzles
(not shown in Figure 1) disposed in the chamber 10 to
provide the desired spray pattern. The storage tanks
may be also connected to the outlets 32, 34 and 36 so
that spent liquid can be fed back into the appropriate
storage tank. Equipment for cleaning, filtering or regenerating the relevant liquid may be interposed between the outlets 32, 34, 36 and the respective storage tanks.   A control system and suitable pumping equipment is provided to enable the desired liquid to be sprayed in the chamber 10 for a predetermined time in accordance with a specified cleaning and rust proofing schedule.

As stated, it is an important advantageous feature of the invention that hollow constructional parts of the vehicle such as chassis members, if they do not already have holes or apertures therein to allow access to the interior, are bored or otherwise perforated so as to permit the ingress of liquid.   This may be done either when the vehicle is located on the patform 20 or before it is driven into the chamber 10.   As stated, nozzles at the ends of respective hoses are used to feed treatment liquid into the interior of the hollow parts of the vehicle.

Once this has been done and the vehicle is in the chamber 10, a cleaning liquid containing a fat emulsifier is supplied under pressure through the nozzles, and is forced by the pressure into most if not all of the interstices of the vehicle.   Thereafter, the vehicle is washed thoroughly with water, also supplied under pressure through the nozzles.   The next step is to supply a rust proofing liquid to the chamber under pressure for a predetermined time, and in this step this liquid contacts the cleaned parts of the car and thoroughly penetrates the interstices thereof.   It is preferred for the next step to be a water rinsing step.

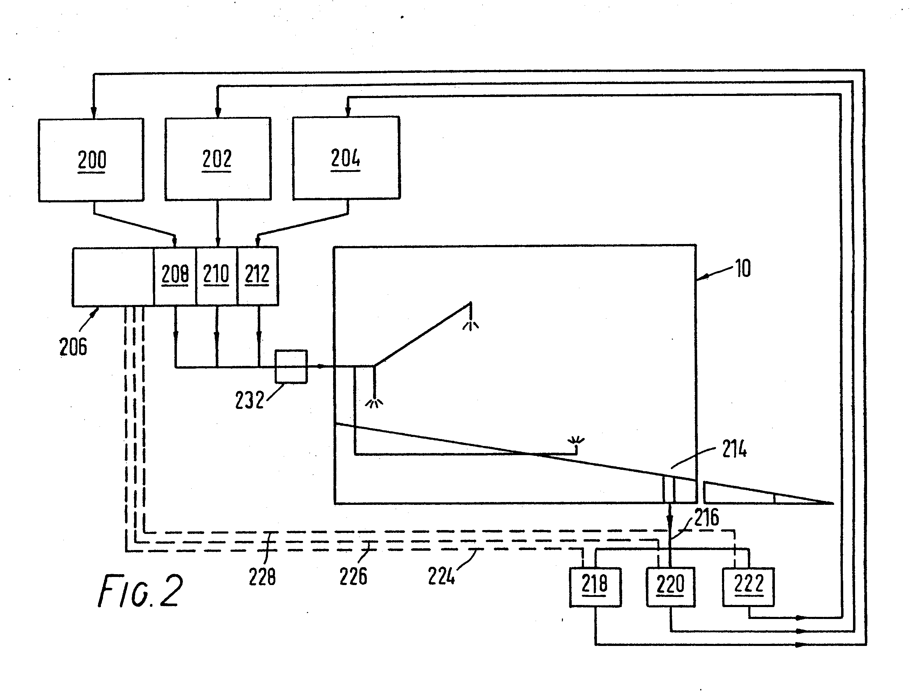

The chamber is preferably provided with heating equipment whereby it may be maintained at an elevated temperature during one or more of the method steps and in particular during the application of anti-corrosion liquid and the drying step. It is possible to apply the anti-corrosion liquid at a temperature in the range 70°C to 90°C, with about 75° to 85°C being a specially preferred temperature as representing a good balance between cleaning and rust proofing effectiveness and cost of heating energy. Naturally the chamber 10 will be insulated in order to conserve energy. If a heating coil is used to heat the liquid as it is fed from pump 232 (Figure 2) to the chamber 10, then a stainless steel or an aluminium coil may be used.

The washing step and the rinsing step may be carried out with hot or cold water, and drying of the vehicle after the application of rust proofing liquid is optional, as this may be unnecessary in warm or temperate countries. The last rinsing is preferably with very clean water.

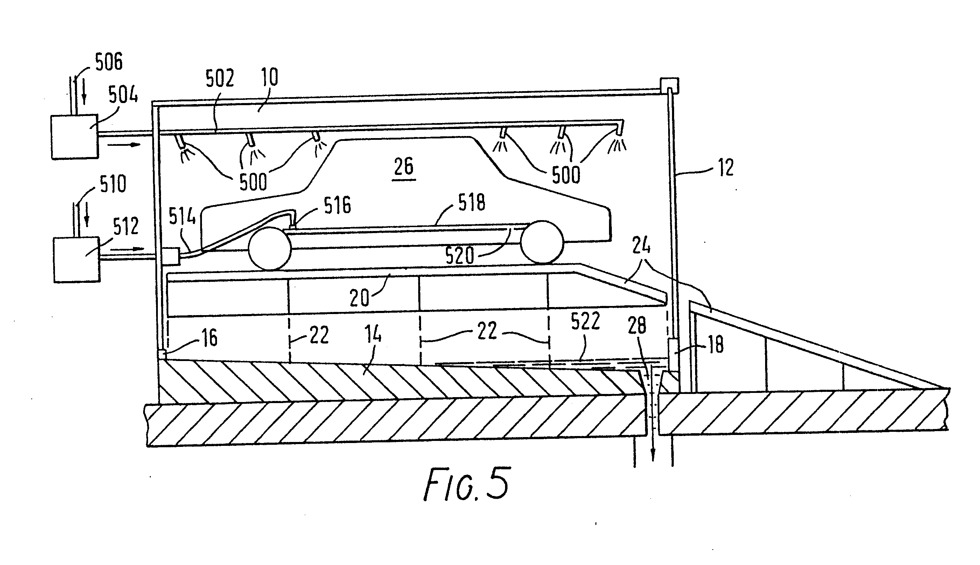

At the end of the last rinsing step, the composition of the rinsing liquid may be changed. That is to say, the last few seconds of the rinsing step may be carried out with a liquid consisting of water plus a small amount of a rust-preventor liquid. Said liquid may be injected into the pipes 502 and 514 (Figure 5) by a suitable dispenser timed to operate a few seconds before the end of the cycle of operation.

It will be realised that an elevated platform such as the platform 20 and a ramp such as the ramp 24 are not essential; one could utilise a chamber or room having an inspection pit let into the floor.

The chamber 10 may be included in a system for supplying treatment liquids. Such a system is shown in Figure 2. It includes three storage tanks 200, 202, 204. The tank 200 contains water, the tank 202 a cleansing liquid such as water including a detergent, and the tank 204 a rust-removing and rust proofing liquid such as is specifically described above. The supply of liquid from the tanks is controlled by a control unit 206 which controls three valves 208, 210, and 212. The control unit may be manually operated or may be computer-operated according to a desired program; alternatively the unit 206 may include a timer which opens and closes the valves 208-212 at predetermined times. The liquid from the valves is fed by a pump 232 at a pressure in the range 0.1 to 150 atmos. to spray nozzles of which three are indicated in the chamber 10; in practice many more nozzles will be included and will be located at geometrical positions in the chamber chosen in accordance with the requirements for spraying directions; these will be determined largely by the shape of the article to be treated.

The spent liquid collects in a sump region 214 and leaves the chamber 10 via a drain pipe 216. It passes to three valve-pump devices 218, 220, 222 which correspond partly in function to the valves 32-36 of Figure 1. The valve-pump devices 218-222 are electrically operable and may be controlled, as indicated by the control cables 224, 226, 228, by the control unit 206. It will be understood that only one of the valve-pump devices is operated at any one time and the liquid pumped thereby is returned to the relevant tank 200 or 202 or 204. Although not shown, the lines leading from the devices 218, 220, 222 to the tanks 200, 202, 204 may include conventional liquid filtering, cleaning and treating equipment, to permit regeneration of spent liquid if desired.

10.

In one example of practical operation of the invention, the tank 200 is filled with water, the tank 202 with water containing 0.5 to 50 percent by volume of a liquid detergent and the tank 204 is filled with a rust-treating and anti-corrosion liquid whose composition is, per 100 ml. of water

| | | |
|---|---|---|
| Citric acid (anhydrous) | 3 | to 52 grammes |
| Fat emulsifier | 0.001 to | 4 grammes |
| Corrosion inhibitor | 0.001 to | 3 grammes. |

A suitable fat emulsifier is that known as TEEPOL (Regd. Trade Mark) GD 53 sold by Shell Chemicals Ltd.    A suitable inhibitor is that known as ARMOHIB (Regd. Trade Mark) 25 sold by Armour Hess Chemicals Ltd.   A small quantity of glycol may be included in the above composition to avoid too rapid drying of the anti-corrosion liquid.

In one practical example of the invention, a motor vehicle is treated in accordance with the following program:-

(a)   spray with liquid containing fat emulsifier for at least 1/4 minute,

(b)   water spray for at least 1/4 minute, and

(c)   spray with rust-removing and anti-corrosion liquid at a pressure (above atmospheric) of from 1/10 to 2 atmospheres.

Preferably, step (c) is carried out at a pressure of from 0.15 to 0.3 atmospheres, and at a temperature of from 20 to 85 and preferably 50 to 80°C.

11.

After step (c), in a preferred version of the method according to the invention, the vehicle is:

(i) rinsed with water e.g. at 15 to 80°C, and
(ii) dried with hot or warm air, e.g. at 15 to 90°C.

It will be understood that a conventional air blower and air heater (not shown) can be associated with the chamber 10 to supply warm air thereto.

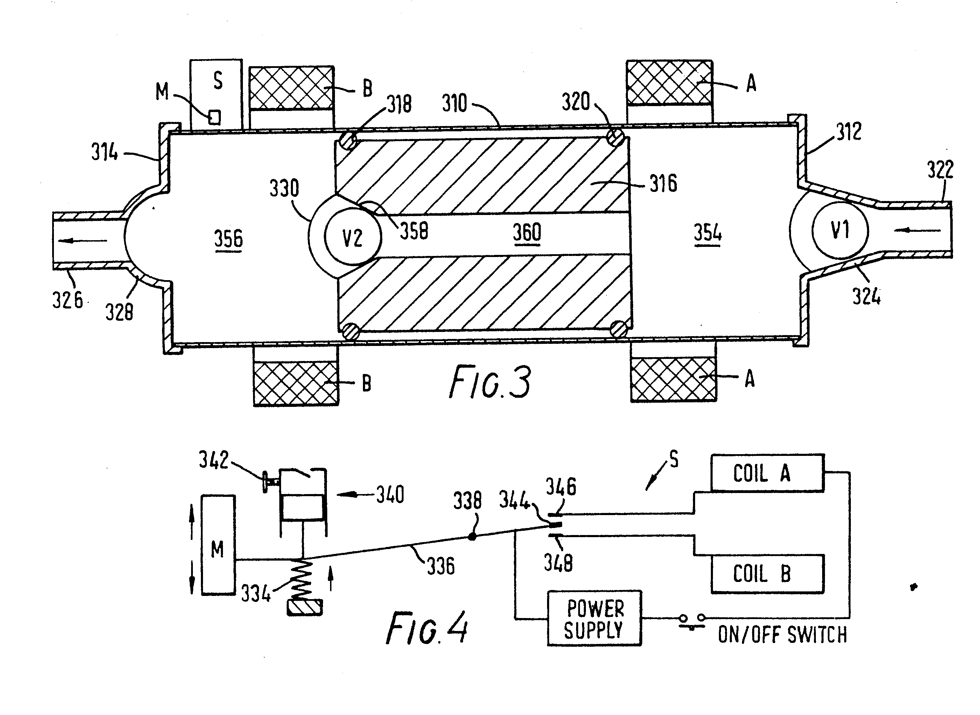

Figures 3 and 4 show one example of a valve-pump device such as the device 218. The device, hereinafter in this particular description called merely a pump for simplicity, has a cylindrical housing 310, made of a synthetic plastics material or a non-magnetic metal, to which are fitted end caps 312, 314 made of light material. Within the housing reciprocates a cylindrical plunger 316, which is a permanent magnet. Two O-rings 318 and 320 engage the inner curved surface wall of the housing 310.

The end cap 312 defines an entry pipe 322 and flares outwardly in conical form as seen at 324. This provides a valve seat for non-return check valve V1 having a

spherical valve element. The other end cap 14 defines an exit pipe 326 and has a hemispherical portion 328 provided to receive a cage 330 secured to the plunger 316. The cage 330 acts to retain a second non-return check valve having a spherical ball valve element V2.

Located outside the housing 310 is a first electrical coil A and a second electrical coil B, which when energised create a magnetic field which acts upon the plunger 316. Also outside the housing is a monitoring switch S having a movable armature M. This is of a magnetic material so that it is moved towards the axis of the housing 310 when the plunger 316 is at the lefthand end of the housing 310 and is moved away by a compression spring 334 (Figure 4) when the plunger 316 is at the right-hand end of the housing 310.

The armature M of the switch S is, as seen in Figure 4, connected to a pivoted lever 336 whose fulcrum is seen at 338. A dashpot 340 having a controllable lead valve 342 is also connected to the lever 336 and provides a delay in the movement of the lever 336. The end 344 of the lever carries a contact which touches either contact 346 or contact 348 according to the position of the lever 336. In this way, a current is fed from the power supply 350 either to the coil A of the coil B according to the position of contact 344.

In operation, the alternate energisation of coils A and B causes the plunger 316 to reciprocate within the housing 310, and during its leftward movement liquid is sucked in via entry pipe 322 into an inlet chamber 354, past the valve V1. Also during this movement of the plunger, any liquid in the exit chamber 356 is forced out of the exit pipe 326. At this time, ball valve V2 is closed against its conical seating 358. When the

When the plunger reaches its lefthand limiting position, the permanent magnet attracts the armature M and changes over the contact 344. The other coil is then energised, after a delay determined by the dashpot 340. When the other coil is energised, the plunger moves back to the right, and during this movement the valve V1 is closed and the liquid in inlet chamber 354 passes through a central passageway 360 of the plunger 316, past valve V2, and into exit chamber 356. This sequence of operation continues until an on-off switch is moved to the open position. This switch is seen in Figure 4 in its open position.

While the valve-pump device has been particularly described and illustrated as including two coils, it will be appreciated that the plunger could be given its return movement by a compression spring or a tension spring, or in any other convenient way. In such a case, only one electrical coil would be needed and this would be alternately energised and de-energised.

Figure 5 is a view similar to Figure 1 and like parts are denoted by the same reference numerals as in Figure 1. The Figure 5 illustrates schematically a series of spray nozzles 500 fed by a supply line 502 from a pump 504, whose input line is shown at 506. The line 506 is connectable to any one of the storage tanks shown in Figure 2 or to a mains water supply. The pump 504 may be any suitable known pump, and may have an output pressure from 0.1 to 150 atmospheres.

A second input line 510 leads to a pump 512 which is preferably a continuously-variable output pressure pump. The pump 512 feeds a plurality of hoses of which one is shown at 514. Each such hose has a nozzle 516 at its further end, and the nozzles are constructed so

14.

that they can be fitted tightly into suitable bores made in a hollow part of the vehicle 26. One such part is the hollow chassis member diagrammatically indicated at 518. A second hole 520 is made in this to allow egress of the treatment liquid which falls into the sump as indicated at 522. The pump 512 may have a continuously-variable output pressure over the range 0.1 to 100 atmospheres but will usually be operated at the lower end of this range. A flow meter may be provided in each hose and the pump pressure may be controlled in accordance with the flow rate in the hose having the lowest flow. As the flow therein increases, due to removal of interior rust, the pump pressure may be increased correspondingly. With such an arrangement, it is possible to achieve a highly desirable anti-rust treatment of a motor vehicle, and similar methods may be used for other metal articles.

CLAIMS

1.     A cleaning and anti-corrosion treatment method for a ferrous article which comprises the following steps:

(a)   placing the article in a chamber;

(b)   closing the chamber;

(c)   supplying a cleaning liquid containing a fat emulsifier to the chamber under pressure for a predetermined time;

(d)   washing the article with water;

(e)   supplying a rust-removing and anti-corrosion liquid to the chamber under pressure for a predetermined time, and

(f)   drying the article if necessary and removing it from the chamber.

2.     A method according to claim 1 in which hollow constructional parts of the article are bored so as to allow ingress of liquid to their interior before the supply of cleaning liquid is effected.

3.     A method according to claim 1 or 2 in which the anti-corrosion liquid employed is water-based and includes the following essential ingredients:  an aliphatic hydroxycarboxylic acid for example citric acid, a fat emulsifier and a corrosion inhibitor.

4.     A method according to claim 3 in which the liquid employed is water based and includes the following ingredients per 100 ml.   :-

| | | |
|---|---|---|
| Citric acid (anhydrous) | 3 | to 52 grammes |
| Fat emulsifier | 0.001 | to  4 grammes |
| Corrosion inhibitor | 0.001 | to  3 grammes. |

5.    A method according to any preceding claim in which steps (c) and (d) are repeated one or more times before step (e) is carried out, and in which a water-rinsing step is interposed between steps (e) and (f).

6.    A method according to any preceding claim in which step (e) is carried out at a pressure in the range 0.15 to 0.5 atmospheres above atmospheric pressure, and at a temperature of from 20 to 85°C.

7.    Apparatus for the cleaning and anti-corrosion treatment of metal articles including a chamber, means for making the chamber substantially pressure-tight, a platform within the chamber, a sump beneath the platform, spray nozzles within the chamber for directing liquid onto or into the or each article, a filter located in an exit pipe for the sump, and control means for controlling the supply of liquid to the nozzles whereby the article can be treated in succession with a plurality of different liquids.

8.    Apparatus according to claim 7 in combination with a system for supplying liquid under a pressure to the spray nozzles, the system including a plurality of tanks whose outlets are controlled by respective valves, and a plurality of valve-pump devices arranged downstream of the sump to return spent liquid to the relevant tank.

9.    Apparatus according to claim 7 or 8 including, in addition to the spray nozzles, a plurality of hoses terminating in nozzles which can be fitted to hollow parts of the article in order to feed treatment liquid thereinto, the hose nozzles being connected to be fed with treatment liquid from a first pump separate from a second pump which is connected to feed the spray nozzles.

10. Apparatus according to claim 7 or 8 which includes a pump for feeding liquid to the spray nozzles, the arrangement being such that the pressure within the chamber can be brought to a value of from 0.15 to 1.0 atmospheres above atmospheric pressure.

11. Apparatus according to any of claims 7 to 10 and for treating vehicles including a ramp leading up to the platform and having a gap therein to accommodate a door for the chamber whereby the latter may be rendered closed and substantially pressure-tight.

*Fig.1*

FIG.2

FIG. 3

FIG. 4

Fig.5